(19) Europäisches Patentamt
European Patent Office
Office européen des brevets

(11) **EP 2 279 897 B1**

(12) **FASCICULE DE BREVET EUROPEEN**

(45) Date de publication et mention
de la délivrance du brevet:
**26.09.2012   Bulletin 2012/39**

(51) Int Cl.:
***B60N 2/02*** *(2006.01)*      ***B60N 2/24*** *(2006.01)*
***B60N 2/44*** *(2006.01)*      ***B64D 11/06*** *(2006.01)*

(21) Numéro de dépôt: **10305839.2**

(22) Date de dépôt: **29.07.2010**

(54) **Procédé de gestion de la cinématique d'un siège à parties mobiles par espace de liberté et siège le mettant en oeuvre**

Steuerverfahren der Kinematik eines Sitzes mit beweglichen Teilen gemäß des Freiraums, und Sitz, bei dem dieses Verfahren umgesetzt wird

Method for managing the kinematics of a seat with moving parts by space of freedom and seat implementing the same

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **31.07.2009   FR 0955414**

(43) Date de publication de la demande:
**02.02.2011   Bulletin 2011/05**

(73) Titulaire: **Precilec**
**89000 Auxerre (FR)**

(72) Inventeur: **Thoreux, Loic**
**92400, Courbevoie (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**DE-A1-102006 027 994      FR-A1- 2 801 480**
**FR-A1- 2 821 252**

**Description**

La présente invention concerne un siège, du type comportant au moins deux parties mobiles les unes par rapport aux autres et au moins deux actionneurs pour le déplacement des parties mobiles afin de modifier la configuration du siège d'une position initiale à une position finale déterminée par un utilisateur, au moins une partie mobile comportant un point particulier prédéterminé. L'invention s'applique au domaine des sièges de véhicules de transport de passagers tels que les avions et les trains.

Afin d'améliorer le confort des passagers, de nombreux sièges sont munis de dispositifs électriques d'actionnement permettant de modifier la configuration du siège par déplacement de parties mobiles de celui-ci.

Par exemple, un tel siège comporte un dossier inclinable et un repose-jambes chacun articulé à une extrémité d'une assise, le repose-jambes est généralement prolongé par un repose-pieds coulissant. Ceux-ci sont chacun déplacés par un actionneur propre. Le siège lui-même est parfois déplaçable globalement par rapport au piètement fixe du siège sous la commande d'un actionneur.

Lorsque certaines parties du siège heurtent des obstacles, cela peut conduire à la dégradation de ces obstacles (par exemple des bagages) et du siège et diminuer ainsi la durée de vie du siège. Afin de pallier ces inconvénients, l'unité de pilotage du siège comporte des moyens de gestion de la commande de chacun des actionneurs.

Un tel siège est modélisé mécaniquement par un ensemble de points particuliers, par exemple l'extrémité libre du dossier ou du repose-pieds, et chaque point particulier est déplacé suivant une trajectoire préalablement définie qui lui est associée et permettant à chaque point particulier d'éviter les obstacles pour passer d'une première à une seconde position prédéterminée. Un logiciel permet d'asservir la vitesse du ou de chaque actionneur impliqué dans le mouvement du point particulier pour que celui-ci suive au mieux la trajectoire associée. Chaque changement de position prédéterminée impose une reprise des trajectoires associées.

Bien que cette solution de gestion des actionneurs permette effectivement d'éviter que certaines parties du siège ne heurtent des obstacles, la définition des trajectoires est extrêmement délicate à effectuer d'autant plus que le siège comporte un grand nombre de parties mobiles (et autant d'actionneurs).

En outre, l'asservissement de la vitesse de chaque actionneur impliqué dans le déplacement des parties mobiles du siège dans une position prédéterminée est continu puisque la position courante de chaque point particulier des parties mobiles doit se trouver sur la trajectoire. Par conséquent, la position courante de chaque point particulier est constamment corrigée afin de suivre la trajectoire prédéterminée.

Le document FR 2 821 252 A1 (correspondant au préambule de la revendication indépendante 1 de procédé ainsi qu'au préambule de la revendication indépendante 8 de produit) décrit un siège qui comporte des parties mobiles, au moins un actionneur et une unité de pilotage. Cette dernière comporte : des moyens de suivi de la position courante de chaque actionneur; et des moyens de gestion de la commande de chaque actionneur. Les moyens de gestion comportent : des moyens de calcul de la position courante d'un point critique du siège; des moyens d'évaluation de la position courante de chaque point critique du siège par rapport à une frontière; et des moyens de commande d'au moins un actionneur indépendamment de la commande sélectionnée par l'utilisateur.

L'invention a pour but de proposer un siège de véhicule, et un procédé de gestion de sa cinématique permettant de faciliter le réglage des configurations du siège, notamment dans des positions prédéterminées, imposées par l'utilisateur en rendant la gestion des trajectoires plus permissives.

A cet effet, l'invention a pour objet un procédé de gestion de la cinématique d'un siège du type précité, **caractérisé en ce qu'**il comporte les étapes suivantes pour chaque point particulier :

- déterminer, pour le ou chaque point particulier, un conduit de circulation autorisée entre la position initiale et la position finale, le conduit de circulation étant délimité par au moins deux frontières latérales opposées ;
- calculer la position courante et la direction courante de déplacement du point particulier ;
- déterminer une direction cible pour le point particulier adaptée pour déplacer le point particulier dans le conduit de circulation autorisée à partir des au moins deux frontières du conduit de circulation associé et de la position courante du point particulier ; et
- modifier la direction du point particulier en commandant au moins un actionneur afin d'astreindre le point particulier à se déplacer dans son conduit de circulation associé dans la direction cible jusqu'à la position finale du siège.

Suivant des modes particuliers de réalisation, le procédé de gestion de la cinématique d'un siège comporte l'une ou plusieurs des caractéristiques suivantes :

- chaque frontière du conduit de circulation comporte un ensemble de courbes polynomiales ;
- le procédé comprend, pour chaque point particulier, une étape de calcul de la vitesse courante du ou de chaque actionneur associé au point particulier et l'étape de modification de la direction du point particulier comporte une étape d'asservissement de la vitesse du ou de chaque actionneur pour modifier la direction du point particulier afin d'astreindre le point particulier à se déplacer dans son conduit de circulation associé dans la direction cible jusqu'à la position finale du siège ;

- l'asservissement de la vitesse du ou de chaque actionneur est fonction pour chaque point particulier, de la position courante du point particulier par rapport aux frontières du conduit de circulation associé et du déplacement du point particulier induit par chaque actionneur ;
- l'étape de détermination de la direction cible pour le point particulier est fonction de la position courante du point particulier par rapport aux frontières du conduit de circulation associé et de la tangente des frontières ;
- le procédé comporte, pour chaque point particulier, une étape de vérification de la position initiale du point particulier, cette étape de vérification étant adaptée à commander le ou chaque actionneur, lorsque la position courante du point particulier est située en dehors du conduit de circulation associé, afin de ramener le point particulier dans le conduit de circulation associé ; et
- le procédé comporte, pour au moins un point particulier, une étape de modification du conduit de circulation associé au cours du temps.

L'invention a également pour objet un siège de véhicule comportant au moins deux parties mobiles les unes par rapport aux autres et au moins deux actionneurs pour le déplacement des parties mobiles afin de modifier la configuration du siège d'une position initiale à une position finale déterminée par un utilisateur, au moins une partie mobile comportant un point particulier prédéterminé, le siège étant **caractérisé en ce qu**'il comporte pour chaque point particulier :

- des moyens de définition, pour le ou chaque point particulier, d'un conduit de circulation autorisée entre la position initiale et la position finale, le conduit de circulation étant délimité par au moins deux frontières latérales opposées ;
- des moyens de calcul de la position courante et la direction courante du point particulier ;
- des moyens de détermination d'une direction cible pour le point particulier adaptée pour déplacer le siège dans le conduit de circulation autorisée à partir des frontières du conduit de circulation associé ;
- des moyens de commande d'au moins un actionneur associé au point particulier pour déplacer le point particulier suivant la direction cible déterminée ;
- des moyens de comparaison de la direction courante du point particulier et de la direction cible ; et
- des moyens de modification de la direction du point particulier afin d'astreindre le point particulier à se déplacer dans son conduit de circulation associé dans la direction cible jusqu'à la position finale du siège.

Suivant un mode particulier de réalisation, le siège comporte des moyens d'asservissement de la vitesse du ou de chaque actionneur pour modifier la direction du point particulier afin d'astreindre le point particulier à se déplacer dans son conduit de circulation associé dans la direction cible jusqu'à la position finale du siège.

L'invention sera mieux comprise à la lecture de la description qui va suivre, donnée uniquement à titre d'exemple, et faite en se référant aux dessins, sur lesquels :

- la figure 1 est une vue schématique d'un siège de véhicule selon l'invention ;
- la figure 2 est un schéma illustrant le mouvement du dossier d'un siège de véhicule et la notion d'espace de liberté selon l'invention ;
- la figure 3 est un schéma illustrant le mouvement du dossier d'un siège de véhicule et la notion de conduit de circulation selon l'invention ; et
- la figure 4 est un schéma-bloc d'un organigramme explicitant le fonctionnement du siège par la mise en oeuvre d'un procédé de gestion de sa cinématique selon l'invention.

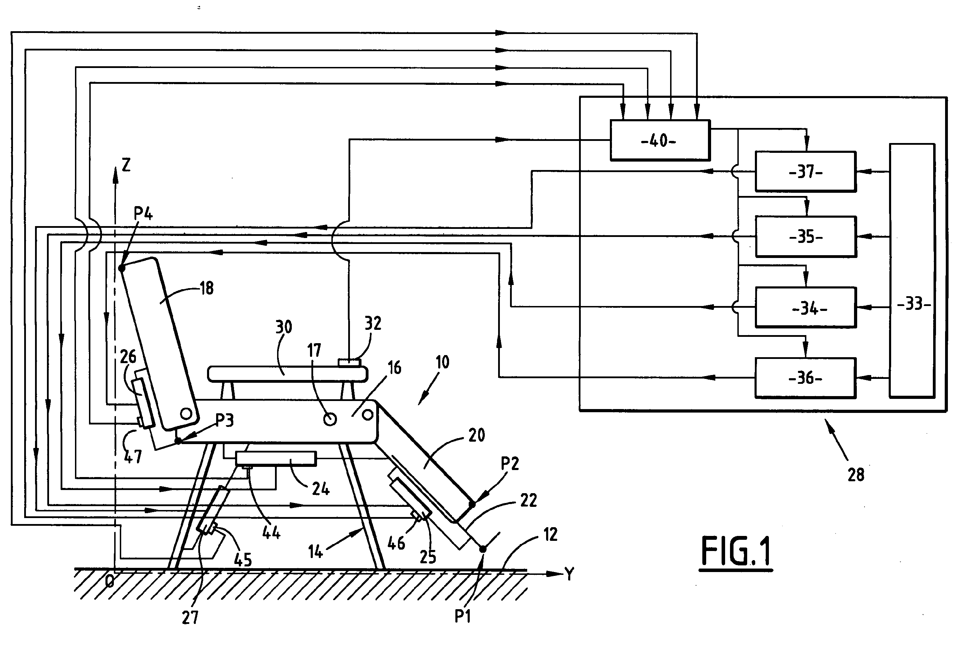

Le siège 10 représenté sur la figure 1 est un siège de passager d'un avion. Ce siège est fixé sur le sol 12 de l'avion.
Le siège 10 comporte un piètement 14 solidaire du sol 12 sur lequel repose une assise 16 sensiblement horizontale.
Un dossier 18 et un repose-jambes 20 sont articulés chacun à une extrémité de l'assise 16.
Le dossier 18 est inclinable par rapport à l'assise 16 entre une position relevée sensiblement verticale et une position rabattue sensiblement horizontale.
Le repose-jambes 20 est déplaçable entre une position rabattue sensiblement verticale en dessous de l'assise 16 et une position étendue sensiblement horizontale dans le prolongement de l'assise 16.
Le siège 10 comporte en outre un repose-pieds 22 monté déplaçable à coulissement par rapport au repose-jambes 20 dans le prolongement de celui-ci.
Le repose-pieds 22 est déplaçable entre une position escamotée à l'intérieur du repose-jambes 20 et une position étendue dans laquelle il prolonge celui-ci et est pratiquement sorti.
Quatre actionneurs électriques permettent d'assurer le déplacement des parties mobiles du siège 10. Les quatre actionneurs fonctionnent à des vitesses différentes d'un actionneur à l'autre.

Un premier actionneur électrique 24 est monté entre l'assise 16 et le repose-jambes 20 afin d'assurer un déplacement de ce dernier entre sa position rabattue et sa position étendue.

De même, un deuxième actionneur électrique 25 est prévu entre le repose-jambes 20 et le repose-pieds 22 afin d'assurer le déplacement du repose-pieds 22 entre sa position escamotée et sa position étendue.

Un troisième actionneur électrique 26 est monté entre l'assise 16 et le dossier 18 afin d'assurer le déplacement du dossier entre sa position relevée et sa position rabattue.

Enfin, un quatrième actionneur électrique 27 est monté entre l'assise 16 et le piètement 14 afin d'assurer le basculement de l'assise 16.

Le siège comporte une unité centrale de pilotage 28 adaptée à alimenter en courant électrique chacun des quatre actionneurs 24 à 27. Pour cela, l'unité de pilotage 28 comporte une source 33 d'alimentation des actionneurs, formée par exemple d'un transformateur relié au réseau d'alimentation électrique générale de l'avion par des moyens de connexion adaptés.

L'unité de pilotage 28 est reliée séparément à chacun des actionneurs 24 à 27 afin d'assurer leur pilotage indépendant. Ainsi, pour chaque actionneur, une interface d'alimentation 34, 35, 36 et 37 assure l'alimentation des actionneurs, respectivement 24, 25, 26 et 27, à partir de la source d'alimentation 33. Ces interfaces assurent la mise en forme du courant d'alimentation des actionneurs en fonction du sens d'actionnement souhaité.

Les interfaces d'alimentation 34 à 37 sont pilotées par une unité de traitement d'informations 40. Cette unité de traitement d'informations 40 comporte par exemple un microprocesseur mettant en oeuvre un programme adapté décrit dans la suite de la description.

En outre, le siège comporte un accoudoir 30, sur lequel est fixé un clavier de commande 32 permettant la commande indépendante des actionneurs 24 à 27 afin de provoquer leur déplacement.

L'unité de traitement d'informations 40 est reliée au clavier de commande 32 afin de recueillir les ordres de commande du passager.

Le clavier 32 comporte des touches permettant au passager d'atteindre une configuration du siège différente de la configuration actuelle. Cette configuration peut être une des configurations prédéterminées, par une commande unique agissant sur un ou plusieurs actionneurs, par exemple pour atteindre une configuration assise, une configuration de couchage...

Enfin, chaque actionneur est équipé d'un ou plusieurs capteurs de position. Ces capteurs, désignés par la référence 44, 45, 46 et 47 respectivement pour les actionneurs 24, 25, 26 et 27, sont reliés à l'unité de traitement d'informations 40. Ainsi, l'unité 40 est informée de la position courante de chaque actionneur. Ces capteurs sont par exemple formés de potentiomètres ou de micro-contacts implantés entre les parties fixes et mobiles des actionneurs.

Pour le fonctionnement du siège, l'unité de traitement d'informations 40 met en oeuvre un algorithme ou programme connu en soi pour commander les interfaces d'alimentation 34 à 37 afin que celles-ci assurent l'alimentation des actionneurs 24 à 27 dans un sens ou dans l'autre par inversion du sens du courant, en fonction des informations reçues depuis l'unité 40.

Selon l'invention, l'algorithme mis en oeuvre par l'unité 40 de traitement d'informations est adapté pour, lors d'une commande de déplacement d'au moins une partie du siège par le passager depuis le clavier, interdire le déplacement des parties mobiles au-delà d'un espace de liberté fictif E prédéterminé. Cet espace de liberté est fixé à l'écart d'un obstacle, par exemple un autre siège en avant et/ou en arrière du siège considéré, des bagages... Cet espace de liberté sera décrit en détail par la suite.

L'algorithme mis en oeuvre pour le pilotage du siège est adapté pour déterminer la position d'un ensemble de points particuliers prédéterminés du siège dans un repère (O, Y, Z), notamment un repère cartésien lié à la structure fixe du siège et en particulier au piètement 14.

Les points particuliers du siège sont formés par exemple par les extrémités des parties mobiles du siège, ces extrémités constituants les parties du siège risquant de heurter un obstacle lors d'une modification de la configuration du siège.

En particulier, un premier point particulier P1 est formé par l'extrémité inférieure du repose pieds, un second point particulier P2 étant formé par l'extrémité libre supérieure du repose-jambes.

Un troisième point particulier P3 est formé par l'extrémité arrière inférieure de l'assise 16 articulée, un quatrième point particulier P4 étant constitué de l'extrémité libre arrière supérieure du dossier 18 articulé.

Le repère (O, Y, Z) dans lequel sont déterminées les coordonnées cartésiennes des points critiques P1 à P4 est illustré sur la figure 1. Ce repère est un repère orthonormé direct dont l'axe des abscisses (O, Y) s'étend horizontalement suivant la surface du sol et dont l'axe des ordonnées (O, Z) s'étend verticalement. L'origine O du repère est fixe par rapport au piètement 14.

Par ailleurs, l'unité de traitement d'informations 40 comporte des moyens de mémorisation de l'espace de liberté fictif E de chaque point particulier défini dans le repère de référence, les limites de cet espace de liberté ne devant pas être dépassées par le point particulier P1 à P4 qui lui est associé.

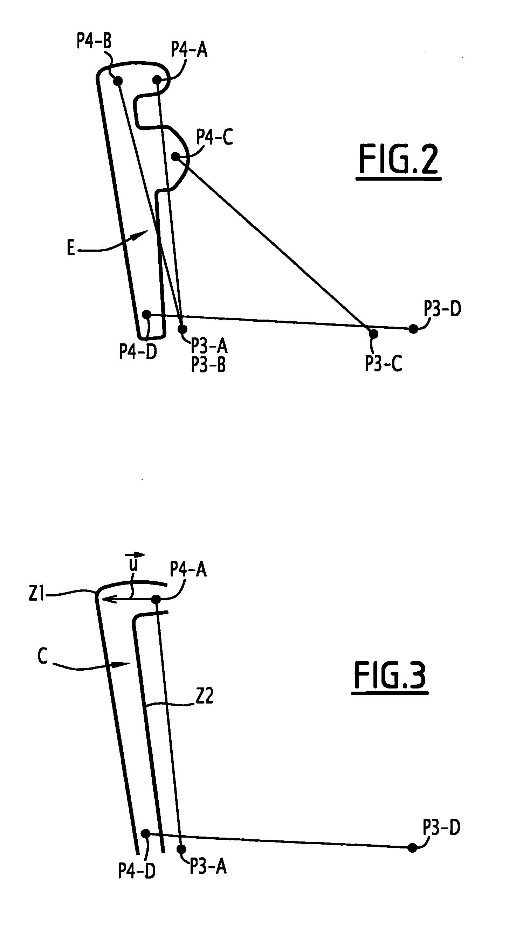

La figure 2 illustre un tel espace de liberté E pour le point particulier P4 du dossier. Quatre positions prédéterminées pour le dossier sont représentées : une position de dîner A, standard B, de confort C et de couchage D. Pour chacune de ces positions, est illustré la position de deux points particuliers : celui de l'assise P3 et celui du dossier P4.

Ainsi, le point particulier P4 du dossier est astreint à se déplacer dans cet espace de liberté E, quelque soit la configuration du siège.

Dès qu'une demande de l'utilisateur est détectée, l'unité 40 de traitement des informations détermine un conduit C de circulation autorisée pour chaque point particulier à partir des positions initiale et finale des points particuliers et en fonction de cet espace de liberté E.

Par exemple, un tel conduit de circulation C est illustré sur la figure 3, pour le point particulier P4 du dossier dans le cas où l'utilisateur veut passer de la position de dîner A à la position de couchage D.

Pour chaque point particulier, le conduit de circulation C comporte, de préférence, au moins deux frontières latérales opposées Z1, Z2 délimitant le conduit de circulation. Ces frontières illustrées sur la figure 3 pour le point P4 pour l'exemple décrit ci-dessus sont sensiblement parallèles l'une à l'autre et sont séparées d'une distance comprise entre 2 et 20 cm, de préférence entre 4 et 6 cm. Les frontières sont utilisées afin que chaque point particulier se déplace entre ces deux frontières Z1, Z2, dans le conduit de circulation destiné à le guider entre la position initiale du siège et la position finale déterminée par l'utilisateur.

Chaque frontière du conduit de circulation C comporte un ensemble de courbes polynomiales.

Les moyens de mémorisation de l'unité de traitement d'informations 40 sont également adaptés à mémoriser le conduit C de circulation autorisée et les frontières associées de chaque point particulier.

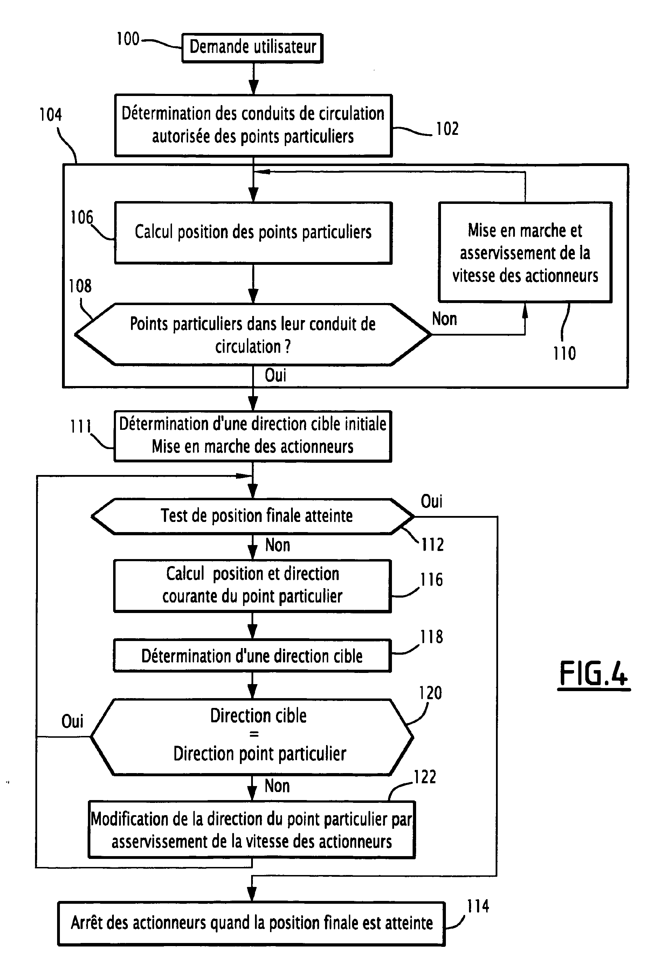

Au cours de l'utilisation du siège, le programme dont l'organigramme est représenté sur la figure 4 est mis en oeuvre.

A l'étape 100, l'unité de traitement d'informations 40 scrute le clavier 32 pour déterminer si l'utilisateur a commandé la modification de la configuration du siège d'une position initiale à une position finale par le déplacement d'au moins une partie mobile du siège.

Ainsi, après la détection d'une demande de l'utilisateur à l'étape 100, l'unité de traitement 40 détermine pour chaque point particulier un conduit de circulation autorisée entre la position initiale et la position finale au cours d'une étape 102. A cet effet, elle recherche en mémoire le conduit prédéfini mémorisé pour passer de l'une à l'autre des positions.

En regard des figures 2 et 3, à partir de l'espace de liberté E prédéterminé d'un point particulier, par exemple le point particulier P4 de l'assise, l'unité 40 de traitement identifie les frontières Z1 et Z2 du conduit de circulation du point particulier P4 pour le déplacer d'une position A (P4-A) de dîner à une position D (P4-D) de couchage.

Ensuite, le procédé comporte pour chaque point particulier, une étape 104 de vérification si la position initiale du point particulier se situe bien à l'intérieur de son conduit de circulation.

Pour cela, au cours d'une étape 106, l'unité 40 détermine par calcul la position des points particuliers P1 à P4 dans le repère de référence (O, Y, Z).

Puis, à une étape 108, elle teste que les points particuliers sont bien entre les frontières de leur conduit de circulation respectif, dans leur espace de liberté, à partir des coordonnées des points particuliers et des équations des frontières Z1 et Z2 établies dans le repère de référence.

Si tel n'est pas le cas, l'étape 104 de vérification est adaptée à commander au moins un actionneur dans une étape 110 lorsque la position courante d'un point particulier est située en dehors du conduit de circulation associé, afin de ramener le point particulier dans le conduit de circulation associé.

Le déplacement de chaque point particulier induit par la mise en oeuvre d'un actionneur sera décrit en détail par la suite.

Si chaque point particulier est dans son conduit de circulation, le procédé de gestion de la cinématique du siège se poursuit.

La suite de la description sera faîte en considérant qu'un seul point particulier associé à une partie mobile du siège, par exemple l'assise, doit se déplacer entre une position initiale et une position finale. Les étapes suivantes sont réalisées pour chaque point particulier en mouvement afin de modifier la configuration du siège entre la position initiale et la position finale.

Au cours d'une étape 111, l'unité 40 détermine une direction cible initiale pour le point particulier adaptée pour déplacer le siège entre la position initiale et la position finale à l'intérieur du conduit de circulation autorisée à partir de sa position courante. La direction cible est déduite de la tangente des frontières et de la distance du point particulier à ces frontières. La frontière la plus proche a le plus d'influence sur la direction cible, afin que le point particulier soit « repoussé » par les frontières du conduit de circulation autorisée.

Par exemple, la relation suivante est utilsée pour déterminer un angle $\alpha_{cible}$ :

$$\alpha_{cible} = \frac{\alpha_{T1} - \left(\frac{\Pi}{2} - \frac{\Pi}{2}\frac{d_1}{d_1 + d_2}\right) + \alpha_{T2} + \left(\frac{\Pi}{2} - \frac{\Pi}{2}\frac{d_2}{d_1 + d_2}\right)}{2},$$

où $d_1$ et $d_2$ sont respectivement les distances minimales entre le point particulier et les frontières Z1 et Z2, et $\alpha_{T1}$ et $\alpha_{T2}$ sont respectivement les angles des tangentes aux frontières Z1 et Z2 aux points des frontières où la distance avec le point particulier est minimale.

Ainsi, plus le point particulier est proche d'une frontière, plus la direction cible devient perpendiculaire à la tangente à cette frontière. Si le point particulier est à égale distance des deux frontières, la direction cible sera sensiblement parallèle à ces frontières.

C'est le cas, par exemple, représenté sur la figure 3, de la direction cible initiale du point particulier P4 représentée par le vecteur $\vec{\mathbf{u}}$ sensiblement parallèle au conduit C.

Puis, l'unité 40 commande la mise en fonctionnement d'au moins un actionneur associé au point particulier pour déplacer le point particulier suivant la direction cible initiale $\vec{\mathbf{u}}$ déterminée.

Au cours d'une étape 112, l'unité 40 vérifie si la position finale du point particulier est atteinte. Dans ce cas, les actionneurs sont arrêtés au cours d'une étape 114.

Si tel n'est pas le cas, au cours d'une étape 116, l'unité 40 calcule la position courante par rapport aux frontières du conduit de circulation associé et la direction courante du point particulier.

Puis, dans une étape 118, l'unité 40 détermine une nouvelle direction cible pour le point particulier à partir de sa position courante. La direction cible est déterminée comme à l'étape 111 précédente.

A l'étape 120, la direction courante du point particulier et la direction cible sont comparées par exemple, par une comparaison des angles.

Si les directions courante et cible sont identiques, le point particulier continue de se déplacer dans son conduit de circulation autorisée grâce aux actionneurs.

Si tel n'est pas le cas, au cours d'une étape 122, l'unité 40 de traitement commande alors les actionneurs afin de modifier la direction du point particulier pour déplacer le point particulier selon la nouvelle direction cible. Cette modification est réalisée par un asservissement de la vitesse respective des actionneurs afin d'astreindre le point particulier à se déplacer dans son conduit de circulation associé jusqu'à la position finale du siège.

Un ou plusieurs actionneurs peuvent alors être ralentis, arrêtés simultanément ou séquentiellement ou voir leur sens de déplacement s'inverser, afin de maintenir le point particulier dans son conduit de circulation.

L'asservissement est fonction pour chaque point particulier, de la position courante du point particulier par rapport aux frontières du conduit de circulation associé et du déplacement du point particulier induit par chaque actionneur.

Pour cela, le procédé comprend pour chaque point particulier, une étape de calcul de la vitesse courante du ou de chaque actionneur associé au point particulier. En effet, chaque capteur 44 à 47 mesure la position des actionneurs 24 à 27, respectivement. L'unité 40 de traitement d'informations comprend en outre des moyens de dérivation adaptés à calculer la dérivée par rapport au temps de la position de chaque actionneur, c'est-à-dire, leur vitesse instantanée ou courante.

Les étapes 116 à 120 sont répétées jusqu'à ce que le siège et donc chaque point particulier ait atteint sa position finale déterminée par l'utilisateur. Dans ce cas, les actionneurs sont arrêtés au cours d'une étape 122.

De façon connue, la position finale est reconnue atteinte lorsque la distance entre la position courante de chaque point particulier et leur position finale théorique respective est inférieure à une autre valeur seuil prédéterminée.

Cet algorithme ne nécessite qu'un calcul précis de la position dans le repère prédéterminé des points critiques du siège, cette position pouvant être calculée relativement facilement à partir des valeurs de position fournies par chacun des actionneurs et de la structure géométrique du siège.

Ainsi, on conçoit que l'algorithme mis en oeuvre permet au siège d'atteindre un très grand nombre de configurations, ces configurations étant définies de telle manière que chaque point particulier est dans son espace de liberté fictif associé et prédéterminé.

En outre, le procédé comporte pour au moins un point particulier, une étape de modification du conduit de circulation associé au cours du temps. En effet, au moins une partie de la définition du conduit C de circulation fictif peut évoluer au cours du temps, en fonction par exemple de la position connue d'un obstacle mobile au voisinage du siège.

Un tel obstacle mobile peut par exemple être formé par un pouf motorisé déplaçable à la surface du sol.

Dans ce cas, le conduit de circulation est défini à une distance fixe du pouf, la définition de ce conduit évoluant au cours du temps en fonction de la position réelle du pouf.

Dans ce cas, lors de chaque mise en oeuvre de l'algorithme figurant sur la figure 4, la position et/ou la forme du conduit de circulation ou d'au moins une de ses frontières dans le repère (O, Y, Z) sont recalculées en fonction de la position du pouf au cours du temps.

Par ailleurs, lorsqu'un siège tel que décrit ici est mis en oeuvre avec un pouf mobile, les moyens de commande du pouf mettent également en oeuvre un algorithme selon l'invention, de sorte qu'un espace de liberté et par conséquent un conduit de circulation est modifié et défini par l'enveloppe du siège et les moyens de commande du pouf sont adaptés afin d'éviter qu'au moins un point critique défini sur le pouf ne franchisse l'espace de liberté qui lui est associé et qui dépend de la position et de la configuration courantes du siège.

Du fait des mouvements du siège, la position et la configuration du siège évoluent au cours du temps.

En d'autres termes, le siège proprement dit et le pouf constituent deux sièges selon l'invention dont les moyens de commande sont adaptés pour éviter tout risque de rapprochement excessif entre un élément mobile du siège et un élément mobile du pouf, par mise en oeuvre, d'une part, d'un espace de liberté associé au siège proprement dit et, d'autre part, d'un espace de liberté associé au pouf. Les espaces de liberté fictifs du siège et du pouf sont utilisés pour la définition des conduits de circulation autorisés respectifs.

## Revendications

1. Procédé de gestion de la cinématique d'un siège (10) comportant au moins deux parties mobiles (16, 18, 20, 22) les unes par rapport aux autres et au moins deux actionneurs (24, 25, 26, 27) pour le déplacement des parties mobiles afin de modifier la configuration du siège d'une position initiale à une position finale déterminée par un utilisateur, au moins une partie mobile comportant un point particulier (P1, P2, P3, P4) prédéterminé, le procédé étant **caractérisé en ce qu'**il comporte les étapes suivantes pour chaque point particulier :

   - déterminer (102), pour le ou chaque point particulier, un conduit (C) de circulation autorisée entre la position initiale et la position finale, le conduit (C) de circulation étant délimité par au moins deux frontières (Z1, Z2) latérales opposées ;
   - calculer (116) la position courante et la direction courante de déplacement du point particulier ;
   - déterminer (118) une direction cible pour le point particulier adaptée pour déplacer le point particulier dans le conduit (C) de circulation autorisée à partir des au moins deux frontières (Z1, Z2) du conduit de circulation associé et de la position courante du point particulier ; et
   - modifier (122) la direction du point particulier en commandant au moins un actionneur afin d'astreindre le point particulier à se déplacer dans son conduit (C) de circulation associé dans la direction cible jusqu'à la position finale du siège.

2. Procédé selon la revendication 1, **caractérisé en ce que** chaque frontière (Z1, Z2) du conduit de circulation (C) comporte un ensemble de courbes polynomiales.

3. Procédé selon l'une quelconque des revendications 1 à 2, **caractérisé en ce qu'**il comprend pour chaque point particulier, une étape de calcul de la vitesse courante du ou de chaque actionneur associé au point particulier et **en ce que** l'étape (120) de modification de la direction du point particulier comporte une étape d'asservissement de la vitesse du ou de chaque actionneur pour modifier la direction du point particulier afin d'astreindre le point particulier à se déplacer dans son conduit de circulation associé dans la direction cible jusqu'à la position finale du siège.

4. Procédé selon la revendication 3, **caractérisé en ce que** l'asservissement de la vitesse du ou de chaque actionneur est fonction pour chaque point particulier, de la position courante du point particulier par rapport aux frontières (Z1, Z2) du conduit de circulation (C) associé et du déplacement du point particulier induit par chaque actionneur.

5. Procédé selon l'une quelconque des revendications 1 à 4, **caractérisé en ce que** l'étape de détermination (118) de la direction cible pour le point particulier est fonction de la position courante du point particulier par rapport aux frontières (Z1, Z2) du conduit de circulation (C) associé et de la tangente des frontières (Z1, Z2).

6. Procédé selon l'une quelconque des revendications 1 à 5, **caractérisé en ce qu'**il comporte pour chaque point particulier, une étape (104) de vérification de la position initiale du point particulier, cette étape (104) de vérification étant adaptée à commander le ou chaque actionneur (24, 25, 26, 27), lorsque la position courante du point particulier est située en dehors du conduit de circulation (C) associé, afin de ramener le point particulier dans le conduit de circulation associé.

7. Procédé selon l'une quelconque des revendications 1 à 6, **caractérisé en ce qu'**il comporte pour au moins un point particulier, une étape de modification du conduit de circulation (C) associé au cours du temps.

8. Siège (10) comportant au moins deux parties mobiles (16, 18, 20, 22) les unes par rapport aux autres et au moins deux actionneurs (24, 25, 26, 27) pour le déplacement des parties mobiles afin de modifier la configuration du siège d'une position initiale à une position finale déterminée par un utilisateur, au moins une partie mobile (16, 18, 20, 22) comportant un point particulier (P1, P2, P3, P4) prédéterminé, le siège (10) étant **caractérisé en ce qu'**il comporte pour chaque point particulier :

   - des moyens de définition, pour le ou chaque point particulier, d'un conduit de circulation autorisée entre la position initiale et la position finale, le conduit de circulation étant délimité par au moins deux frontières latérales opposées ;
   - des moyens de calcul de la position courante et la direction courante du point particulier ;
   - des moyens de détermination d'une direction cible pour le point particulier adaptée pour déplacer le siège dans le conduit de circulation autorisée à partir des frontières du conduit de circulation associé ;
   - des moyens de commande d'au moins un actionneur associé au point particulier pour déplacer le point particulier suivant la direction cible déterminée ;
   - des moyens de comparaison de la direction courante du point particulier et de la direction cible ; et
   - des moyens de modification de la direction du point particulier afin d'astreindre le point particulier à se déplacer dans son conduit de circulation associé dans la direction cible jusqu'à la position finale du siège.

9. Siège selon la revendication 8, **caractérisé en ce qu'**il comporte des moyens d'asservissement de la vitesse du ou de chaque actionneur pour modifier la direction du point particulier afin d'astreindre le point particulier à se déplacer dans son conduit de circulation associé dans la direction cible jusqu'à la position finale du siège.

## Claims

1. Method for controlling the kinematics of a seat (10) comprising at least two portions (16, 18, 20, 22) movable relative to each other and at least two actuators (24, 25, 26, 27) for moving the movable portions in order to modify the configuration of the seat from an initial position to a final position which is determined by a user, at least one movable portion comprising a predetermined specific point (P1, P2, P3, P4), the method being **characterised in that** it comprises the following steps for each specific point:

   - establishing (102), for the or each specific point, an authorised travel conduit (C) between the initial position and the final position, the travel conduit (C) being delimited by at least two opposite lateral boundaries (Z1, Z2);
   - calculating (116) the current position and the current movement direction of the specific point;
   - establishing (118) a target direction for the specific point that is suitable for moving the specific point in the authorised travel conduit (C) from the at least two boundaries (Z1, Z2) of the associated travel conduit and the current position of the specific point; and
   - modifying (122) the direction of the specific point by controlling at least one actuator in order to force the specific point to move in its associated travel conduit (C) in the target direction as far as the final position of the seat.

2. Method according to claim 1, **characterised in that** each boundary (Z1, Z2) of the travel conduit (C) comprises a set of polynomial curves.

3. Method according to either claim 1 or claim 2, **characterised in that** it comprises, for each specific point, a step of calculating the current speed of the or each actuator which is associated with the specific point and **in that** the step (120) of modifying the direction of the specific point comprises a step of controlling the speed of the or each actuator in order to modify the direction of the specific point in order to force the specific point to move in the associated travel conduit thereof in the target direction as far as the final position of the seat.

4. Method according to claim 3, **characterised in that** the control of the speed of the or each actuator is a function, for each specific point, of the current position of the specific point relative to the boundaries (Z1, Z2) of the associated travel conduit (C) and the movement of the specific point brought about by each actuator.

5. Method according to any one of claims 1 to 4, **characterised in that** the step (118) of establishing the target direction for the specific point is a function of the current position of the specific point relative to the boundaries (Z1, Z2) of the associated travel conduit (C) and the tangent of the boundaries (Z1, Z2).

6. Method according to any one of claims 1 to 5, **characterised in that** it comprises, for each specific point, a step (104) of verifying the initial position of the specific point, that verification step (104) being suitable for controlling the or each actuator (24, 25, 26, 27) when the current position of the specific point is located outside the associated travel conduit (C) in order to bring the specific point back into the associated travel conduit.

7. Method according to any one of claims 1 to 6, **characterised in that** it comprises, for at least one specific point, a step of modifying the associated travel conduit (C) over time.

8. Seat (10) comprising at least two portions (16, 18, 20, 22) which are movable relative to each other and at least two actuators (24, 25, 26, 27) for moving the movable portions in order to modify the configuration of the seat from an initial position to a final position which is determined by a user, at least one movable portion (16, 18, 20, 22) comprising a predetermined specific point (P1, P2, P3, P4), the seat (10) being **characterised in that** it comprises, for each specific point:

   - means for defining, for the or each specific point, an authorised travel conduit between the initial position and the final position, the travel conduit being delimited by at least two opposite lateral boundaries;
   - means for calculating the current position and the current direction of the specific point;
   - means for establishing a target direction for the specific point that is suitable for moving the seat in the authorised travel conduit from the boundaries of the associated travel conduit;
   - means for controlling at least one actuator associated with the specific point in order to move the specific point according to the established target direction;
   - means for comparing the current direction of the specific point and the target direction; and
   - means for modifying the direction of the specific point in order to force the specific point to move in the associated travel conduit thereof in the target direction as far as the final position of the seat.

9. Seat according to claim 8, **characterised in that** it comprises means for controlling the speed of the or each actuator in order to modify the direction of the specific point in order to force the specific point to move in the associated travel conduit thereof in the target direction as far as the final position of the seat.

**Patentansprüche**

1. Verfahren zur Handhabung des Bewegungsvorgangs von einem Sitz (10), umfassend mindestens zwei gegeneinander bewegliche Teile (16, 18, 20, 22) und mindestens zwei Antriebselemente (24, 25, 26, 27) für die Verschiebung der beweglichen Teile, um die Konfiguration des Sitzes von einer Ausgangsposition in eine von einem Anwender bestimmte Endposition zu verändern, wobei mindestens ein beweglicher Teil einen bestimmten vorbestimmten Punkt (P1, P2, P3, P4) umfasst, wobei das Verfahren **dadurch gekennzeichnet ist, dass** es für jeden bestimmten Punkt die folgenden Schritte umfasst:

   - Bestimmen (102), für den oder jeden bestimmten Punkt, von einer Leitung (C) von Bewegung, die zwischen der Ausgangsposition und der Endposition zulässig ist, wobei die Bewegungsleitung (C) durch mindestens zwei seitliche gegenüberliegende Grenzen (Z1, Z2) begrenzt ist;
   - Berechnen (116) der aktuellen Position und der aktuellen Verschiebungsrichtung des bestimmten Punkts;
   - Bestimmen (118) einer Zielrichtung für den bestimmten Punkt, die dazu ausgelegt ist, den bestimmten Punkt in der Leitung (C) von Bewegung, die ab der mindestens zwei Grenzen (Z1, Z2) der zugehörigen Bewegungsleitung und von der aktuellen Position des bestimmten Punkts aus zulässig ist, zu verschieben; und
   - Verändern (122) der Richtung des bestimmten Punkts, indem mindestens ein Antriebselement gesteuert wird, um den bestimmten Punkt zur Bewegung in seiner zugehörigen Bewegungsleitung (C) in der Zielrichtung bis zur Endposition des Sitzes zu veranlassen.

2. Verfahren nach Anspruch 1, **dadurch gekennzeichnet, dass** jede Grenze (Z1, Z2) der Bewegungsleitung (C) einen Satz von polynomischen Kurven umfasst.

3. Verfahren nach einem der Ansprüche 1 bis 2, **dadurch gekennzeichnet, dass** es für jeden bestimmten Punkt einen Schritt zur Berechnung der aktuellen Geschwindigkeit des oder eines jeden dem bestimmten Punkt zugehörigen Antriebselements umfasst und dadurch dass der Änderungsschritt (120) der Richtung des bestimmten Punkts einen Regelungsschritt der Geschwindigkeit des oder eines jeden Antriebselements umfasst, um die Richtung des bestimmten Punkts zu ändern, um den bestimmten Punkt zur Verschiebung in seiner zugehörigen Bewegungsleitung in der Zielrichtung bis zu der Endposition des Sitzes zu veranlassen

**4.** Verfahren nach Anspruch 3, **dadurch gekennzeichnet, dass** die Regelung der Geschwindigkeit des oder eines jeden Antriebselements für jeden bestimmten Punt eine Funktion ist der aktuellen Position des bestimmten Punkts bezüglich der Grenzen (Z1, Z2) der zugehörigen Bewegungsleitung (C) und der von jedem Antriebselement ausgelösten Verschiebung des bestimmten Punkts.

**5.** Verfahren nach einem der Ansprüche 1 bis 4, **dadurch gekennzeichnet, dass** der Bestimmungsschritt (118) der Zielrichtung für den bestimmten Punkt eine Funktion ist der aktuellen Position des bestimmten Punkts bezüglich der Grenzen (Z1, Z2) der zugehörigen Bewegungsleitung (C) und der Tangente der Grenzen (Z1, Z2).

**6.** Verfahren nach einem der Ansprüche 1 bis 5, **dadurch gekennzeichnet, dass** es für jeden bestimmten Punkt einen Verifizierungsschritt (104) der Ausgangsposition des bestimmten Punkts umfasst, wobei dieser Verifizierungsschritt (104) dazu ausgelegt ist, das oder jedes Antriebselement (24, 25, 26, 27) zu steuern, wenn die aktuelle Position des bestimmten Punkts außerhalb der zugehörigen Bewegungsleitung (C) liegt, um den bestimmten Punkt in die zugehörige Bewegungsleitung zurückzuholen.

**7.** Verfahren nach einem der Ansprüche 1 bis 6, **dadurch gekennzeichnet, dass** er für mindestens einen bestimmten Punkt einen Änderungsschritt der zugehörigen Bewegungsleitung (C) im Laufe der Zeit umfasst.

**8.** Sitz (10), umfassend mindestens zwei gegeneinander bewegliche Teile (16, 18, 20, 22) und mindestens zwei Antriebselemente (24, 25, 26, 27) für die Verschiebung der beweglichen Teile, um die Konfiguration des Sitzes von einer Ausgangsposition in eine von einem Anwender bestimmte Endposition zu verändern, wobei mindestens ein beweglicher Teil (16, 18, 20, 22) einen bestimmten vorbestimmten Punkt (P1, P2, P3, P4) umfasst, wobei der Sitz (10) **dadurch gekennzeichnet ist, dass** er für jeden bestimmten Punkt folgendes umfasst:

- Definitionsmittel für den oder jeden bestimmten Punkt von einer Leitung für zwischen der Ausgangsposition und der Endposition zugelassene Bewegung, wobei die Bewegungsleitung durch mindestens zwei seitliche gegenüberliegende Grenzen begrenzt ist;
- Berechnungsmittel der aktuellen Position und der aktuellen Verschiebungsrichtung des bestimmten Punkts;
- Bestimmungsmittel einer Ziel richtung für den bestimmten Punkt, die dazu ausgelegt ist, den Sitz in der Leitung von ab den Grenzen der zugehörigen Bewegungsleitung zulässigen Bewegung zu verschieben;
- Steuermittel für mindestens ein dem bestimmten Punkt zugehöriges Antriebselement, um den bestimmten Punkt in einer festgelegten Zielrichtung zu verschieben;
- Vergleichsmittel der aktuellen Richtung des bestimmten Punkts und der Zielrichtung; und
- Änderungsmittel der Richtung des bestimmten Punkts, um den bestimmten Punkt zur Bewegung in seiner zugehörigen Bewegungsleitung in der Zielrichtung bis zur Endposition des Sitzes zu veranlassen.

**9.** Sitz nach Anspruch 8, **dadurch gekennzeichnet, dass** er Regelungsmittel der Geschwindigkeit des oder eines jeden Antriebselements umfasst, um die Richtung des bestimmten Punkts zu ändern, um den bestimmten Punkt zur Bewegung in seiner zugehörigen Bewegungsleitung in der Zielrichtung bis zur Endposition des Sitzes zu veranlassen.

FIG.1

FIG.2

FIG.3

100 → Demande utilisateur

Détermination des conduits de circulation autorisée des points particuliers — 102

104

Calcul position des points particuliers — 106

Mise en marche et asservissement de la vitesse des actionneurs

108 — Points particuliers dans leur conduit de circulation ?

Non

110

Oui

111 — Détermination d'une direction cible initiale Mise en marche des actionneurs

Test de position finale atteinte

Oui

Non — 112

Calcul position et direction courante du point particulier — 116

Détermination d'une direction cible — 118

Direction cible = Direction point particulier — 120

Oui

Non — 122

Modification de la direction du point particulier par asservissement de la vitesse des actionneurs

Arrêt des actionneurs quand la position finale est atteinte — 114

**FIG.4**

**EP 2 279 897 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2821252 A1